# EUROPEAN PATENT SPECIFICATION

(11) **EP 1 188 272 B1**
(45) Date of publication and mention of the grant of the patent: **04.08.2004**
(21) Application number: 00930953.5
(22) Date of filing: 02.06.2000
(51) Int. Cl.: H04L 12/18, H04L 12/46

(54) **METHOD FOR ENGINEERING PATHS FOR MULTICAST TRAFFIC**
VERFAHREN ZUR LEITWEGERZEUGUNG FÜR MEHRFACHDATENVERKEHR
PROCEDE DE PRODUCTION DE VOIES DESTINEES AU TRAFIC A MULTIDESTINATION

(30) Priority: 02.06.1999 US 137509 P
(43) Date of publication of application: 20.03.2002
(73) Proprietor: Nortel Networks Limited, St. Laurent, Quebec H4S 2A9 (CA)
(72) Inventor: LEE, Cheng, Yin, Ottawa, Ontario K2B 6A5 (CA); ANDERSON, Loa, Älvsjö 12522 (SE)
(74) Representative: Free, Rachel, Dr.
(86) International application number: PCT/CA2000/000641
(87) International publication number: WO 2000/076125

(56) References cited:
- ACHARYA A ET AL: "IP Switching Over Fast ATM Cell Transport (IPSOFACTO): Switching multicast flows" GLOBAL TELECOMMUNICATIONS CONFERENCE (GLOBECOM),US,NEW YORK, IEEE, 3 November 1997 (1997-11-03), pages 1850-1854, XP000737838 ISBN: 0-7803-4199-6
- LE FAUCHEUR F: "IETF Multiprotocol Label Switching (MPLS) Architecture" IEEE INTERNATIONAL CONFERENCE ON ATM,XX,XX, 22 June 1998 (1998-06-22), pages 6-15, XP002115225

## Description

### BACKGROUND OF THE INVENTION

### Field of invention

The present invention relates to multicast communications in general and in particular to a method for engineering paths over IP networks.

### Related art

"Network device" is a general term designating a computer linked via a network interface, or to other bridging devices that perform specialized functions in the network such as repeaters, bridges, switches, routers, to name only a few. A repeater is a device that moves the packets from one network segment to another by regenerating, re-timing, and amplifying the electrical signals. A bridge is a device that operates at the link layer and passes packets from one network to another and increases efficiency by filtering packets to reduce the amount of unnecessary packet propagation on each network. A switch is a network device similar in function to a multi-port bridge and includes a plurality of ports for coupling to similar ports in other networks and directing traffic between networks.

Switches and routers are used to cross-connect a group of trunks and for transmitting data packets from source to destination. Each switch/router maintains a table whose entries each include an address and trunk identification number. Each data packet includes a source address, a destination address, and a payload. Upon reception of a packet at a switch, the source address contained in the packet and the identification number of the trunk on which the packet arrived are stored as an entry in the table, unless the table already includes an entry comprising this address and the trunk identification.

A host node initiating a transmission to another node is called the source node. The host node which receives the packet is called the destination node. Thus, a host node may initiate transmission or receive data, whereas a router can only receive and retransmit data. Establishing communications between a single source node and a single destination node is achieved through a process called unicast routing.

"IP Switching Over Fast ATM Cell Transport (IPSOFACTO); Switching multicast flows", Acharya A at al., IEEE, November 3, 1997; pp. 1850-1854, discloses a method of mapping IP flows to ATM switches. The switch processor uses VC tables.

Multicasting is defined as a communications process involving one or more senders and receivers. Information transmitted by any participant in the multicast is received by every other participant in the multicast. Users connected to the network who are not participants in a particular multicast do not receive the information transmitted by any of the senders and no network components, e.g. switches/routers or trunks, are used unless needed for the multicast. For example, broadcast involving one sender and many receivers is a particular case of multicasting and may include wide-area broadcast, e.g. TV and radio, narrowcast for smaller areas, and conferencing with selected numbers of transmitters and receivers across a wide area.

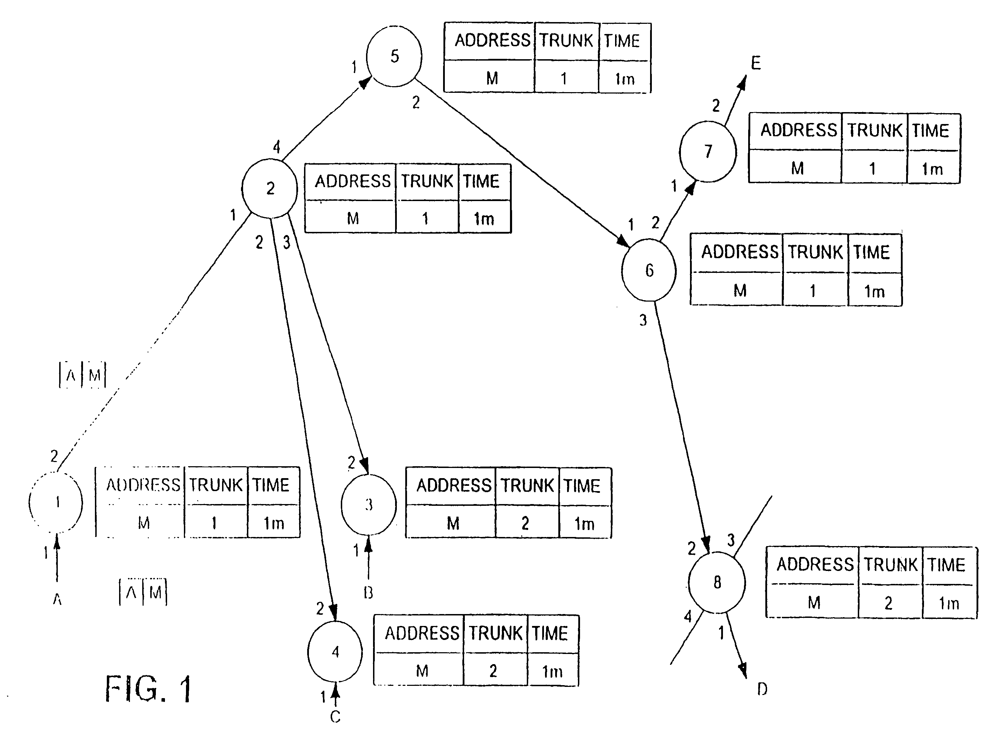

As exemplary shown in Figure 1, a plurality of nodes interconnected by trunks are arranged to form a spanning tree. Collectively, the sequences of nodes which interconnect all the member nodes of a particular group form a multicast tree. Conventionally, multicast tree construction is sender based forming the spanning tree around a core node. If host nodes A and D wish to set up a multicast transmission using a previously agreed multicast address "M", a packet containing source address "A" and destination address "M" is transmitted in the network. Entries are added at each node where the packet arrives and then deleted after a defined time interval (Maxtime) if the entries are not reinforced from hosts A and D. When a host wants to. join a multicast transmission, even if it is the first participant, it simply transmits a packet from itself to the "M" address. The packet is broadcasted over the entire spanning tree to all member nodes, and the host continues to send packets to the "M" address with a maximum inter-packet time interval smaller than Maxtime to make sure that at least one of the relevant table entries is not cleared. Other hosts wishing to join the multicast, simply transmit a packet to the "M" address whenever they decide to join.

For performing a multicast conversation in a network, the nodes elect a single node among all the nodes within each network to be the "root" node. Each node has a unique identifier (node ID) and the root may be the node having the lowest node ID. At each node, a "root port" which gives the fewest number of hops from this node to the root is selected, while ports not included within the spanning tree are blocked. At the root, all ports are placed in the forwarding state. For each LAN coupled to more than one node, a "designated" node, typically the one closest to the root, is elected to ensure connectivity to all LANs.

A standard spanning tree procedure has been defined for network bridging devices (bridges, routers, switches) to enable these devices to discover a subset of any topology that forms a loop-free (i. e. tree) and yet connects every pair of local area networks (LANs) within the network (i. e. spanning). The spanning tree procedure results in a network path between any two bridging devices which is updated dynamically in response to network modifications. For example, nodes exchange configuration messages called bridge protocol data units (BPDUs) frames, which allow them to calculate the active topology, or the spanning tree by blocking all redundant links and leaving a single communications path.

When a source node has a data packet to transmit to more than one destination node, such packet may be transmitted using a mulicast routing. A delivery process called multicast routing is used to establish multicast communications. As the data packet propagates from router to router, or node to node, the data packet is selectively replicated at certain routers/nodes so that sufficient copies of the data packet are generated and transmitted to each destination node of the multicast group. A path of the multicast tree between two nodes is referred to as a branch. There is only one branch on the multicast tree between any two nodes.

A new branch in a multicast tree is formed by transmitting a JOIN request control packet from the node joining the group to the tree. The multicasttree sends back a JOIN ACKNOWLEDGEMENT control packet in the opposite direction. It is possible to transmit only the JOIN control packet and each node not already in the multicast tree, or a non-member node, which transmits the JOIN request is directly attached to the tree. However, the JOIN acknowledgement provides the ability to prevent loops from occurring.

Thus, the JOIN message grafts a node to a multicast distribution tree creating multicast routes in the process. However, JOIN messages are forwarded based on unicast routes. Thus, when conventional routing tables are used, the multicast routes set up will be based on conventional routes. This precludes the engineering of the traffic based on attributes other than destination address.

Multiprotocol Label Switching (MPLS) has been standardized by Internet Engineering Task Force (IETF). "IEFT Multiprotocol Label Switching (MPLS) Architecture", Francois LE Faucheur, IEEE, June 22, 1998, pp. 6-15, describes the concepts of the MPLS. MPLS integrates a label swapping framework with network layer routing. "Requirements for Traffic Engineering over MPLS", Daniel O. Awduche et al. Network Working Group Internet Draft, October 1998, pp. 1-27, describes a set of requirements for traffic engineering over MPLS. However, further developments are needed for multicast traffic engineering.

There is therefore a need for selecting paths based on traffic engineering (TE) criteria such as address of packet, service level desired, etc. for multicast traffic and to allow resources to be allocated independent of the multicast path setup process.

### SUMMARY OF THE INVENTION

The present invention tries to overcome the disadvantages of the prior art associated with multicast traffic engineering (TE) for IP networks.

In an aspect of the present invention, there is provided a method for engineering paths for multicast traffic in IP networks. The method comprises the steps of defining a forwarding equivalence class (FEC); at an egress label switching router (LSP), detecting a control message matching a defined forwarding equivalence class; obtaining a constraint route in the direction of the root prefix of a multicast tree for the detected control message; for each detected control message, creating a state associated with the forwarding equivalence class and the constraint route; attaching traffic engineering (TE) parameters containing the forwarding state information to the detected control message; allocating resources; and forwarding the detected control message to a specified destination.

According to the invention, a label is associated with a unicast route/prefix and packets sent to that destination can be aggregated by associating them with the label. Since multicast routes are not aggregatable in general, associating a label with a multicast route implies per flow/group resources allocation. In essence, this kind of association results in reservation protocol RSVP (or ATM) specific resources allocation and allows to satisfy per flow quality of service (QoS) requirements.

The constraint-based multicast path setup (CR-MP) is a scalable and cost effective method for providing multicast routing with differentiated services, and can also be used to provide per flow QoS. It also provides for a seamless operation of IP and traffic engineered/MPLS networks.

The "Summary of the Invention" does not necessarily disclose all the features essential for defining the invention. The invention may reside in a sub-combination of the disclosed features.

### BRIEF DESCRIPTION OF THE DRAWINGS

The invention will be now explained by way of example only and with reference to the following drawings.
Figure 1 illustrates a packet switching network for multicast routing;
Figure 2 illustrates how control messages and data are directed in a multicast tree;
Figure 3 illustrates how control messages are directed from an egress node in a multicast tree according to the invention;
Figure 4 is a high level block diagram illustrating the passage of control messages in an egress router/node and the packet header assembly at an egress router/node, according to the invention;
Figure 5 illustrates per root prefix resource allocation process for distributing data in a multicast tree, according to the invention;
Figure 6 is a flow chart illustrating the method of directing control messages from an egress node to the multicast tree, according to the invention;
Figure 7 illustrates per traffic class resource allocation process in a multicast tree according to the invention;
Figure 8 is a high level block diagram illustrating the passage of control messages in an intermediate router/node and the packet header assembly at an intermediate router according to the invention;
Figure 9 illustrates the merging of resources allocation which makes a more efficient use of resources than the merging flows since it allows for resources allocation states to be aggregated.

Similar references are used in different figures to denote similar components.

### DETAILED DESCRIPTION OF THE PREFERRED EMBODIMENT

The following description is of a preferred embodiment by way of example only and without limitation to combination of features necessary for carrying the invention into effect.

In general, the traffic in a network is engineered to traverse certain paths so as to utilize resources in a more optimal manner, while at the same time improving the level of service that can be offered. In conventional IP routing, traffic may be engineered to use a path by configuring preferred links towards destination with a lower metric. Since the forwarding is based on the destination address only, the traffic cannot be engineered based on other attributes, or parameters which maybe useful for traffic engineering (TE) purposes such as the source address or the requested service type (ToS). In contrast, MPLS networks allow traffic to be forwarded based on attributes, also known as forwarding equivalence class (FEC), in addition to the destination address. This provides a versatile and convenient syntax for traffic engineering (TE) purposes.

The method according to the invention provides a routing mechanism applicable to multicast routing protocols (MRPs) such as protocol independent multicast-sparse mode PIM-SM, core based tree CBT, border gateway multiprotocol BGMP, Express or Simple Multicast, which will be called 'control driven' which is different from the 'data driven' or flood and prune protocols like the Distance Vector Mulicast Routing Protocol (DVMRP) or PIM-DM. This method also assumes a multicast group/tree having a common type of service (ToS) requirement. It is possible to meet this requirement even for heterogeneous receivers by layer encoding data in different multicast groups or other variation of layer encoding.

The MPLS concepts used in this disclosure are the FEC, the explicit route object (ERO), the resource allocation, and the path selection which have been already defined in a MPLS environment only for unicast routing. Paths are setup using MPLS functionality so that packets are forwarded along the engineered paths instead of being conventionally routed. A path may be manually configured, or a Constraint Based Routing (CBR) process may be used to obtain a path that meets the traffic requirements. Such a path can then be setup as a constraint route in MPLS using the constraint routing-label distribution protocol (CR-LDP), or the reservation protocol (RSVP) control messages.

Suppose, a control-driven multicast routing protocol (MRP) sends a control message, e.g. a JOIN request, to graft a node to a multicast distribution tree. Since the JOIN request is forwarded based on unicast routes, if the conventional routing table is used, the multicast routes setup will be based on conventional routes. If the control message is sent via paths computed, or statistically configured in advance, the control message is forwarded by a TE entity on a constraint path or route (CR).

For a router to process a control message, the control message should contain a Router Alert option. In such a case, the control message is identified at the egress router by its FEC. Based on the FEC, the TE entity can derive the path the control message should take and allocate resources as specified.

A multicast routing protocol (MRP) sets up the forwarding states on the ports/interface where the control message is received. To allow the establishment of multicast forwarding states based on constraint (unicast) routes (CR), the multicast routing protocol (MRP) which verifies the Reverse Path Forwarding (RPF) must be turned off, or be able to obtain the 'constraint' RPF via a Constraint Based Routing (CBR) application programming interface API. If a loop is detected, the multicast routing protocol (MRP) should not create forwarding states for the group on the port where the control message is received.

For example, to send a JOIN request on an engineered path such as extending CR-LDP or TE-RSVP, or to send and merge JOIN messages for the multicast tree associated with a label implies changing the multicast routing protocol (MRP) to send the JOIN along the constraint route (CR). This operation requires multicast routing protocol (MRP) functionalities to be present in MPLS. Alternatively, MPLS functionalities may be incorporated into multicast routing protocols (MRPs).

The invention uses MPLS labels and explicit route object (ERO) to cause engineered paths to be selected, but data are forwarded using multicast routing. It does not require MPLS, or multicast routing protocols (MRPs) to be merged. Such merger may increase the complexity of multicast traffic engineering (TE) while not providing any means of aggregating multicast traffic engineering.

The conventional approaches require traffic to be engineered for each group/tree since multicast labels/routes are most likely to be not aggregatable. Each group must be assigned a different label.

In contrast, the invention allows a network provider to aggregate the engineered paths towards a root prefix since resource allocation and path selection can be performed independent of the setup of forwarding states/routes. The root prefix may be a source node, a subnet, or a domain. Multicast traffic in the backbone network can then be provisioned in a more scalable manner and statistically multiplexed on the (aggregated) engineered paths.

### At the Egress Router/Node

At any egress router/node, or any router where multicast data exits the network, the IP fields of interest in the control message, referred to as FEC, and the associated path selection mechanisms are defined in a Traffic Configuration Table. The FECs correlate to the control messages, e.g., destination = (root prefix)/ (target-node) address, ToS=codepoint. The path selection mechanisms can be static (based on a table, or a Constraint Based Routing (CBR) table), or a dynamic path selection algorithm. The resources required for the FEC can be statically configured at the egress router, or may be obtained from other entities.

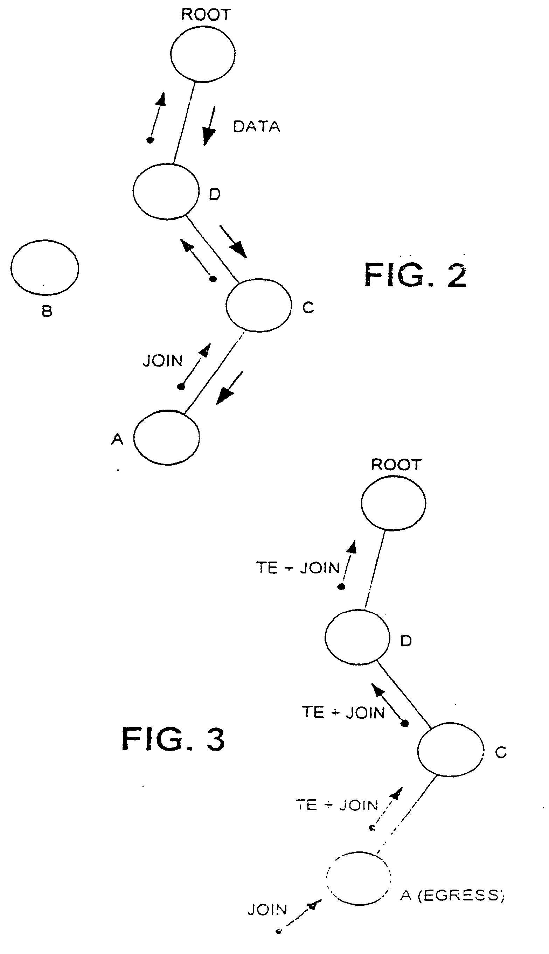

Figure 2 illustrates a branch of a core-based multicast tree for communications between an egress node A and the ROOT node. Initially, traffic with expedite forwarding (EF) type of service (ToS) requirement (ToS=EF), is directed along the path using nodes [A-B-D-ROOT]. Suppose the network decides to re-route the traffic to use node C. A JOIN request control packet is sent from node C to ROOT.

At the egress node A, the TE entity including a Control Message Classifier identifies each control message, classifies the control messages according to the forwarding equivalence class (FEC), and associates the control message to a desired path and the required traffic engineering (TE) parameters, as illustrated in Figure 3. It is to be noted that all egress nodes have consistent TE information and constraint route information, or function for members who join the same group.

The TE information is used by the egress node A to compute the best possible route and the TE parameters, e. g. used bandwidth, when forwarding the JOIN request control packet along the constraint route.

The TE parameters are attached to the control message by the multicast routing protocol (MRP) to create forwarding states (TE+JOIN) for all nodes along the desired communications path. Resources are then allocated for all links transmitting data in one direction and forwarding control messages in the opposite direction.

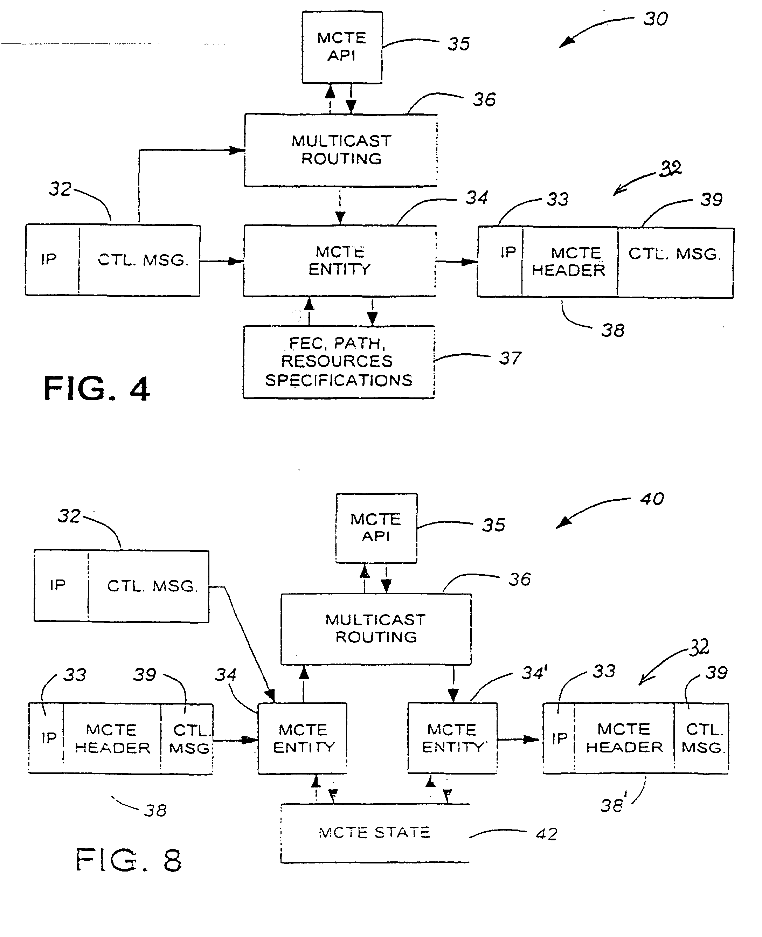

Figure 4 is a high level block diagram illustrating the passage of control messages in an egress router/node **30** and the packet header assembly. A control message 32 arriving at the egress router **30** is processed by the appropriate multicast routing protocol (MRP) entity **36** to setup the multicast forwarding state.

If the control message matches a defined FEC, the control message is diverted to a multicast traffic engineering MCTE entity **34.** How the outgoing control message is diverted to the MCTE entity **34** is implementation dependent. The MCTE entity **34** calls an API entity **35** provided by the MRP entity **36** to find out whether the control message **32** is a path setup (JOIN), a path teardown (LEAVE) message, or a maintenance message. If it is a path setup, the resources specified in the Traffic Configuration Table **37** are allocated. If it is a path teardown message, the reversed resources are released. If it is a maintenance control message **39,** the control message is forwarded "as is" by the multicast routing protocol to intermediate routers as known in the art without any MCTE header **38**.

If there is a similar forwarding state existing at the egress router/node, the control message is discarded. Otherwise, the multicast routing protocol (MRP) entity **36** calls the API entity **35** provided by the Multicast Traffic Engineering (MCTE) entity **34** to get the next hop to the root.

The MCTE entity **34** obtains (a) the route from the conventional routing protocol (MRP) entity **36** if no path or path selection mechanism is specified in the Traffic Configuration Table **37**; or obtains (b) the manually configured explicit route in the Traffic Configuration Table **37**; or obtains (c) the explicit routes via a constraint-based routing (CBR) process, or (d) invokes the path selection algorithm, specified in the Traffic Configuration Table **37**. It is to be noted that the routes in (a) to (c) are based on the network topology, whereas route (d) may take into account the tree topology in the computation of routes.

The MCTE entity **34** stores the route (s) obtained or computed for a particular FEC, and uses these routes when attaching a MCTE header **38** to the control message **39**.

The form of the API provided by the path selection algorithm in (a) to (c) above is represented as a tuple < get_MCTE_next_hop (Target-Node, Group) > , where the Target-Node is a mandatory value. The value of Target-Node is in the form of an IP address **33**. Group is not required for (a)-(c) and optional for (d). The return value is from the next hop to the Target-Node.

The form of the API provided by the path selection algorithm in (d) above is represented as a tuple < get_MCTE_route (Target-Node, Group, Type-of-Metric) >, where the Target-Node is a mandatory value, and the other values are optional. The value of Target-Node is in the form of an IP address **33**. The return value is a list of explicit route (s). "Group" represents an added level of granularity by which network administrators can base their traffic engineering (TE) decisions, e.g. it allows per group/flow traffic engineering (TE): Finally, the Type-of-Metric value correlates to different types of metrics used to distinguish one path from another. The default value is (1), which correlates to hop count. Other defined values consist of (2) bandwidth, (4) delay, (8) fan-out. In cases where the underlying algorithm < get_MCTE_route > does not support metrics other than the hop count, this field is ignored. The Type-of-Metric is specified with the path selection algorithm in the Traffic Configuration Table.

The MCTE header **38** is placed between the IP header **33** and the control message type **39**. Resources as specified in the Traffic Configuration Table **37** are allocated or released before the MCTE message is forwarded to the next hop, and returned by the path selection mechanism. If it is either a path setup or a path teardown message, the MCTE entity **34** attaches a MCTE header 38 containing the FEC, the constraint routes (CR) provided by the path selection mechanism, the resources required e.g. traffic parameters (TE), type of service (ToS), and the protocol ID of the control message. To allow other routers to process this MCTE message which includes the control message **39**, the packet will be labeled with Router Alert and the control message is forwarded towards the root node.

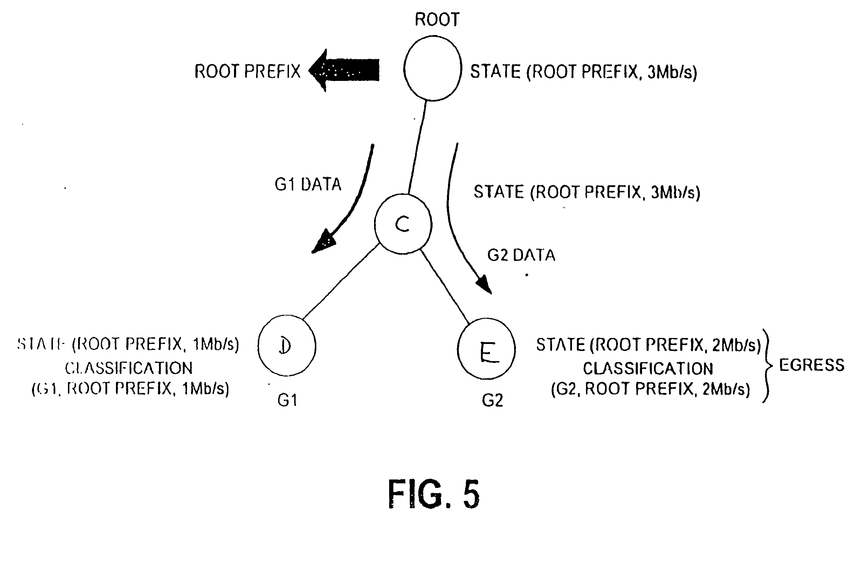

The header of the data packets flowing at an intermediate node C contains the resources allocated per root prefix [Root prefix, nMb/s], as shown in Figure 5. The data packets are forwarded to the egress nodes D, E, for groups G1 and G2 according to their classification which includes in this example tuple < group address; Root prefix; resources allocated>.

The method of traffic engineering according to the invention is flexible since it provides for resources allocation either per each traffic type of service (ToS), or in an aggregated format per Root prefix. This method is capable to engineer traffic with various multicast TE requirements.

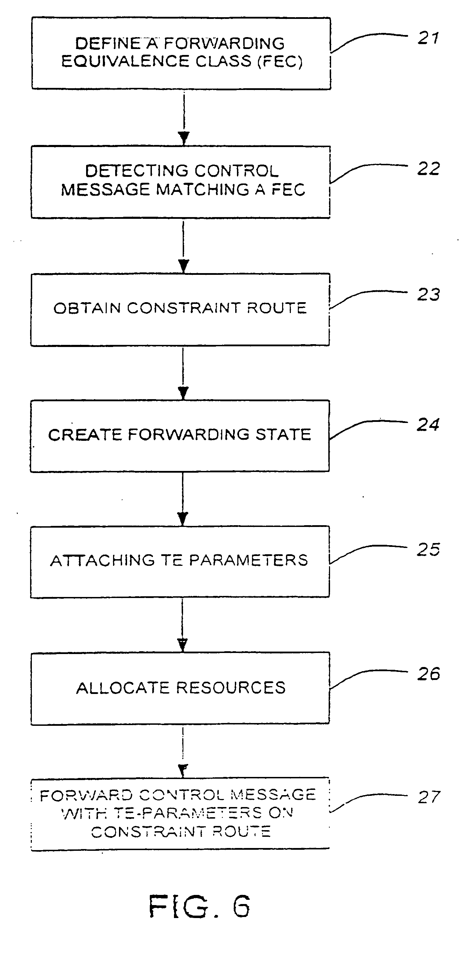

Figure 6 is a flow chart illustrating the method of directing control messages from an egress node to the multicast tree according to the invention. At step **21**, the forwarding equivalence classes (FECs) are defined for the multicast tree. A control message matching a FEC is detected at an egress label switched router (LSR), at step **22**. The LSR obtains a constraint route in the direction of the root prefix, step **23**, creates a forwarding state for the received control message, step **24**, and attaches the traffic engineering (TE) parameters containing the state information to the control message, step **25**. At step **26** resources are allocated and finally the control message is forwarded to the next hop at step **27**.

### At the intermediate Routers/Nodes

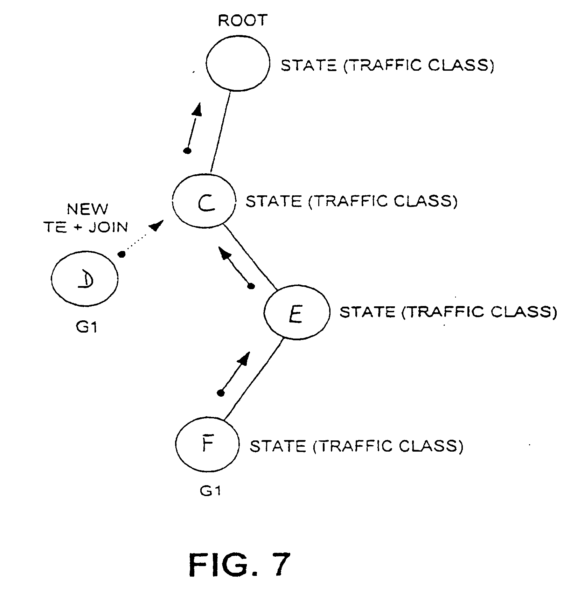

Figure 7 illustrates control messages are directed from an intermediate node in a multicast tree according to the invention. At intermediate node C, after MRP has created forwarding states for all nodes in the multicast tree for Group-1 (G1), the TE entity allocates resources for links receiving the data, and forwards the control messages (TE+JOIN) in the opposite direction using the information contained in the TE message which specifies the traffic type of service (ToS). If at node C an existing forwarding state is present and resources are already allocated, node C will not re-allocate resources for a new (TE+JOIN) message received (dotted line) from a new member of Group-1 (G1) at node D since the JOIN request is merged.

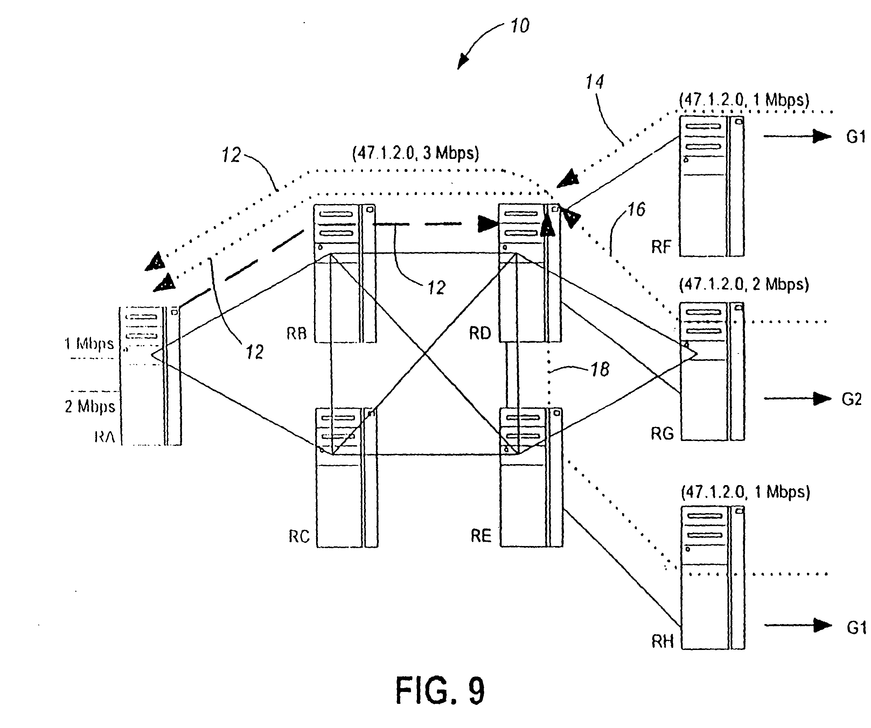

Figure 8 is a high level block diagram illustrating the passage of control message 39 in an egress router/node **40** and the packet header assembly at an intermediate router. When the next hop, or other intermediate node receives a packet **32** with a Router Alert, the packet **32** is extracted from the forwarding path and directed to the MCTE entity **34**. Since the FEC for this control message **32** matches a MCTE state created earlier, the control message **32** is diverted to the MCTE entity **34**. The MCTE entity **34** allocates, or releases the resources requested in the MCTE header **38** and creates a transient state **42** for the MCTE message (MCTE state). Depending on the protocol ID in the MCTE header **38**, the appropriate mutlicast routing protocol (MRP) 36 is then invoked.

The MRP **36** creates the forwarding state forthe group, and forwards the control message **32** towards the root. The MCTE entity **34'** places the corresponding MCTE header **38'** on the control message **32** and forwards the message to the next hop obtained from an MCTE/API **35**. The transient MCTE state is removed at this point.

The FEC is only configured at the egress routers, while intermediate routers are informed of the FEC by previous hops. Similarly, the explicit or constraint route is only configured, or computed at the egress router. The next hop and other intermediate nodes learn of the explicit routes via the constraint route list propagated from the egress router to the tree.

The method according to the invention, allows different path selection algorithms to be used, depending on the FEC and path selection mechanism association. Paths can be configured, computed, discovered or obtained through other means.

A path selection mechanism will return the constraint routes allocated for the group address, the root of multicast tree will be released, when the multicast ends.

### Applications

a) A network operator may define an explicit route [Rx, Ry, Rz] towards a domain with the prefix (47.1.2.0) for multicast traffic. Any member joining a group where the root address has the prefix (47.1.2.0) will have data delivered via the explicit route [Rz, Ry, Rx] and flowing in a direction opposite to the control message. The explicit route may be a Loose Source Route, or a route calculated by an algorithm e.g. an Internal Gateway Protocol (IGP) which can provide constraint based routes.
   Figure 9 illustrates the merging of resources allocation which makes a more efficient use of resources than the conventional way of merging flows since it allows for resources allocation states to be aggregated. The label at node RD includes the IP address of the node and 3Mbps as the stream for G1 has 1 Mbps, and the stream for G2 has 2Mbps. This prevents packets from flowing down branches with no members.
   Path setup along links **12, 14, 16, 18,** may be steered via or only on multicast capable nodes (RA, RD, RE). A non-multicast capable node (RB) will only forward the path setup message without processing it. (A non-multicast capable node can be a member of the Group). When the control packet reaches back the source node RA, node RA sets up a tunnel/LSP to propagate the data to the closest multicast capable node RD located downstream node RB.
   Two or more streams may be merged into one LSP provided there is a high probability the groups are homogenous and include a large number of common members. This can reduce the per flow resource allocation states, but requires to filter the stream at the edge nodes by removing the label and using the Internet protocol (IP) address to forward data to recipients. By merging ToS paths less reservation states are used and less bandwidth wasted. Filtering the packets from non-member groups at the edge is based on the IP address and may require extensive processing depending on the number of packets to be filtered at the edge of network **10**.
   The source node RA may indicate that the video stream has to be replicated a number of times equal to the number of receiving nodes. In addition to the bandwidth requirements, network **10** has to be informed about the amount of replications required and the number of receiving nodes.
   The bandwidth and the number of receiving nodes is defined by the service level agreement (SLA) requested by the customer. To ensure that the bandwidth used does not exceed the available bandwidth, an access policy must be in place. To control the number of egress points used, egress routers do not allow path setup to proceed if the number of egress points requested is higher than the available egress points. If bandwidth, or egress points are not available, the egress node may disallow the path setup.
   It is worth noting that the explicit route can be the desired path from a root node to a member node, instead of the reverse path from member node to the root.
b) In another example, an addition field of interest in the FEC, or in the type of service (ToS) may be defined. This allows a network operator, to engineer paths or/and provision resources for traffic requiring Expedited Forwarding [EF] or Assured Forwarding [AF].
c) To decrease fanout, egress routers containing multicast data traffic can obtain the constraint routes towards the root of the tree and construct the tree along these paths instead. These routes can be statically configured or provided by an algorithm which takes into account fanout in route computation.
d) A load balancing algorithm can provide an alternative path that a control message can take depending on the service level requirement of the group and the current utilization of the equai cost paths.
e) Policy routing may provide for different paths to be defined for different groups.

According to the invention, the traffic engineering (TE) mechanism for multicast routing, including TE functionalities in the MPLS entity, is used to decide where to forward a control message of the multicast routing protocols (MRPs) based on different TE requirements, and how to allocate resources.
The multicast traffic engineering process is separated from the multicast route setup. The resources and the paths for multicast data delivery can be aggregated and independently allocated. Resources are allocated on the same trip when paths are selected and setup and this prevents data from being forwarded on branches where resources have not been yet allocated. The traffic can be statistically multiplexed enabling the network operators to have control over the topology of the multicast trees and to provide differentiated services in a scalable manner.

The multicast TE mechanism allows Internet service providers (ISPs) to define particular FECs for their network; the resources required to receive traffic from a particular root prefix; to decrease fanouts at a node by limiting the number paths towards this node and establishing constraint paths to carry multicast traffic; to experiment with heuristics algorithms how to better engineer multicast trees; or to use a function to dynamically compute suitable paths based on current or predicted network resources. All these additional network, or content provider specific functions to engineer traffic can be developed independently of the conventional multicast traffic engineering scheme.

Numerous modifications, variations, and adaptations may be made to the particular embodiments of the invention without departing from the scope of the invention which is defined in the claims.

## Claims

1. A method of engineering paths for multicast traffic in an IP network, the network including a node which transmits a control message to a multicast tree **characterized in that** the method comprising the steps of:
a) defining a forwarding equivalence class, FEC, for a multicast tree (21);
b) detecting, at an egress label switching router, LSR, a control message matching a the defined forwarding equivalence class (22);
c) obtaining a constraint route (23) in the direction of the root prefix of the multicast tree for said detected control message;
d) for each said detected control message, creating a forwarding state associated with said forwarding equivalence class and said constraint route (24);
e) attaching traffic engineering,TE, parameters containing said forwarding state information to said detected control message (25);
f) allocating resources (37) along said constraint route (26); and
g) forwarding said detected control message and said TE parameters (TE+JOIN) to a specified destination (27).

2. The method of claim 1, further comprising the step of comparing said forwarding state created at step (d) with stored forwarding states (37), and the step of discarding said control message (34, 36) when said created forwarding state is identical with the stored forwarding state (37).

3. The method of claim 1, wherein the step of obtaining a constraint route is provides the constraint route (37) based on the network topology.

4. The method of claim 1, wherein the step of obtaining a constraint route provides the constraint route (37) based on the tree topology.

5. The method of claim 1, wherein the resources (37) and the paths for multicast data delivery are aggregated and independently allocated.

6. The method of claim 1, further comprising creating forwarding states on all ports where said control message with said TE parameters (TE+JOIN) are received, except for ports experiencing loop condition.

7. A computer-readable medium containing computer executable instructions for engineering paths for multicast traffic in an IP network, the network including a node which transmits a control message to a multicast tree **characterized in that** the medium including the steps of:
defining a forwarding equivalence class, FEC, for a multicast tree (21);
detecting, at an egress label switching router, LSR, a control message matching the defined forwarding equivalence class (22);
obtaining a constraint route in the direction of the root prefix of the multicast tree for said detected control message;
for each said detected control message, creating a forwarding state associated with said forwarding equivalence class and said constraint route (24);
attaching traffic engineering, TE, parameters containing said forwarding state information to said detected control message (25);
allocating resources (37) along said constraint route (26); and
forwarding said detected control message and said TE parameters (TE+JOIN) to a specified destination (27).

8. An egress router (30) for multicast communication in an IP network, the network including a node which transmits a control message to a multicast tree **characterized in that** the egress router comprising:
means for defining a forwarding equivalence class, FEC, (37) for a multicast tree;
means for obtaining a constraint route in the direction of the root prefix of the multicast tree for a control message detected at an egress label switching router, LSR, (34), said control message matching the forwarding equivalence class defined for said multicast tree;
means for creating forwarding states associated with the forwarding equivalence class and the constraint route for each detected control message (36);
means for attaching traffic engineering, TE, parameters containing the forwarding state information to said detected control message (34);
means for allocating resources (37) along said constraint route (34); and
means for forwarding said detected control message and said TE parameters (TE+JOIN) to a specified address.

## Patentansprüche

1. Verfahren zur Konstruktion und Planung von Pfaden für Sammelsende-Verkehr in einem IP-Netzwerk, wobei das Netzwerk einen Knoten einschließt, der eine Steuermitteilung an einen Sammelsende-Baum sendet, **dadurch gekennzeichnet, dass** das Verfahren die folgenden Schritte umfasst:
a) Definieren einer Weiterleitungs-Äquivalenzklasse, FEC, für einen Sammelsende-Baum (21);
b) Feststellen, an einem Austritts-Etikettvermittlungs-Router, LSR, einer Steuermitteilung, die mit einer definierten Weiterleitungs-Äquivalenzklasse (22) übereinstimmt;
c) Gewinnen einer Zwangsroute (23) in der Richtung des Wurzel-Präfix des Sammelsende-Baumes für die festgestellte Steuermitteilung;
d) für jede festgestellte Steuermitteilung, Erzeugen eines Weiterleitungszustandes, der der Weiterleitungs-Äquivalenzklasse und der Zwangsroute (24) zugeordnet ist;
e) Anbringen von Verkehrsplanungs-, TE-, Parametern, die die Weiterleitungs-Zustandsinformation enthalten, an der festgestellte Steuermitteilung (25);
f) Zuteilen von Ressourcen (37) entlang der Zwangsroute (26); und
g) Weiterleitung der festgestellten Steuermitteilung und der TE-Parameter (TE+BEITRITT) zu einem angegebenen Ziel (27).

2. Verfahren nach Anspruch 1, das weiterhin den Schritt des Vergleichens des im Schritt (d) erzeugten Weiterleitungszustandes mit gespeicherten Weiterleitungszuständen (37) und den Schritt des Verwerfens der Steuermitteilung (34, 36) umfasst, wenn der erzeugte Weiterleitungszustand identisch mit dem gespeicherten Weiterleitungszustand (37) ist.

3. Verfahren nach Anspruch 1, bei dem der Schritt der Gewinnung einer Zwangsroute die Zwangsroute (37) auf der Grundlage der Netzwerk-Topologie bereitstellt.

4. Verfahren nach Anspruch 1, bei dem der Schritt der Gewinnung einer Zwangsroute die Zwangsroute (37) auf der Grundlage der Baumtechnologie bereitstellt.

5. Verfahren nach Anspruch 1, bei dem die Ressourcen (37) und die Pfade für die Sammelsende-Datenzustellung zusammengefügt und unabhängig zugeteilt werden.

6. Verfahren nach Anspruch 1, das weiterhin die Schaffung von Weiterleitungszuständen auf allen Ports umfasst, an denen die Steuermitteilung mit den TE-Parametern (TE+BEITRITT) empfangen wird, mit Ausnahme von Ports, an denen ein Schleifenzustand auftritt.

7. Computerlesbares Medium, das durch einen Computer ausführbare Befehle zur Konstruktion von Pfaden für einen Sammelsende-Verkehr in einem IP-Netzwerk enthält, wobei das Netzwerk einen Knoten einschließt, der eine Steuermitteilung an einen Sammelsende-Baum sendet, **dadurch gekennzeichnet, dass** das Medium die folgenden Schritte einschließt:
Definieren einer Weiterleitungs-Äquivalenzklasse, FEC, für einen Sammelsende-Baum (21);
Feststellen, an einem Austritts-Etikettvermittlungs-Router, LSR, einer Steuermitteilung, die mit einer definierten Weiterleitungs-Äquivalenzklasse (22) übereinstimmt;
Gewinnen einer Zwangsroute (23) in der Richtung des Wurzel-Präfix des Sammelsende-Baumes für die festgestellte Steuermitteilung;
für jede festgestellte Steuermitteilung, Erzeugen eines Weiterleitungszustandes, der der Weiterleitungs-Äquivalenzklasse und der Zwangsroute (24) zugeordnet ist;
Anbringen von Verkehrsplanungs-, TE-, Parametern, die die Weiterleitungs-Zustandsinformation enthalten, an die festgestellte Steuermitteilung (25);
Zuteilen von Ressourcen (37) entlang der Zwangsroute (26); und
Weiterleitung der festgestellten Steuermitteilung und der TE-Parameter (TE+BEITRITT) zu einem angegebenen Ziel (27).

8. Austritts-Router (30) für eine Sammelsende-Kommunikation in einem IP-Netzwerk, wobei das Netzwerk einen Knoten einschließt, der eine Steuermitteilung an einen Sammelsende-Baum sendet, **dadurch gekennzeichnet, dass** der Austritts-Router Folgendes umfasst:
Einrichtungen zum Definieren eine Weiterleitungs-Äquivalenzklasse, FEC, (37) für einen Sammelsende-Baum;
Einrichtungen zum Gewinnen einer Zwangsroute in der Richtung des Wurzel-Präfix des Sammelsende-Baumes für eine Steuermitteilung, die an einem Austritts-Etikettvermittlungs-Router, LSR, (34) festgestellt wird, wobei die Steuermitteilung mit der für den Sammelsende-Baum definierten Weiterleitungs-Äquivalenzklasse übereinstimmt;
Einrichtungen zur Schaffung von Weiterleitungszuständen, die der Weiterleitungs-Äquivalenzklasse und der Zwangsroute für jede festgestellte Steuermitteilung (36) zugeordnet sind;
Einrichtungen zum Anbringen von Verkehrsplanungs-, TE-, Parametern, die die Weiterleitungs-Zustandsinformation enthalten, an die festgestellte Steuermitteilung (34);
Einrichtungen zur Zuteilung von Ressourcen entlang der Zwangsroute (34); und
Einrichtungen zur Weiterleitung der festgestellten Steuermitteilung und der TE-Parameter (TE+BEITRITT) an eine festgelegte Adresse.

## Revendications

1. Un procédé de conception d'itinéraires pour du trafic de multidiffusion dans un réseau IP, le réseau incluant un noeud qui émet un message de commande vers un arbre de multidiffusion, **caractérisé en ce que** le procédé comprend les étapes suivantes :
a) on définit une classe d'équivalence d'acheminement, FEC ("Forwarding Equivalence Class"), pour un arbre de multidiffusion (21);
b) on détecte, à un routeur de commutation d'étiquettes LSR ("Label Switching Router") de sortie, un message de commande en accord avec la classe d'équivalence d'acheminement définie (22);
c) on obtient une route de contrainte (23) dans la direction du préfixe de racine de l'arbre de multidiffusion, pour le message de commande détecté;
d) pour chaque message de commande détecté, on crée un état d'acheminement associé à la classe d'équivalence d'acheminement et à la route de contrainte (24);
e) on associe des paramètres d'ingénierie de trafic, TE ("Traffic Engineering"), contenant l'information d'état d'acheminement, au message de commande détecté (25);
f) on alloue des ressources (37) le long de la route de contrainte (26); et
g) on achemine le message de commande détecté et les paramètres TE (TE + JOIN) vers une destination spécifiée (27).

2. Le procédé selon la revendication 1, comprenant en outre l'étape de comparaison de l'état d'acheminement créé à l'étape (d) avec des états d'acheminement stockés (37), et l'étape de rejet du message de commande (34, 36) lorsque l'état d'acheminement créé est identique à l'état d'acheminement stocké (37).

3. Le procédé selon la revendication 1, dans lequel l'étape d'obtention d'une route de contrainte fournit la route de contrainte (37) sur la base de la topologie de réseau.

4. Le procédé selon la revendication 1, dans lequel l'étape d'obtention d'une route de contrainte fournit la route de contrainte (37) sur la base de la topologie d'arbre.

5. Le procédé selon la revendication 1, dans lequel les ressources (37) et les itinéraires pour la distribution de données de multidiffusion sont agrégés et alloués indépendamment.

6. Le procédé selon la revendication 1, comprenant en outre la création d'états d'acheminement sur tous les ports auxquels le message de commande avec les paramètres TE (TE + JOIN) sont reçus, à l'exception de ports pour lesquels il existe une condition de boucle.

7. Un support lisible par ordinateur contenant des instructions exécutables par ordinateur pour concevoir des itinéraires pour du trafic de multidiffusion dans un réseau IP, le réseau incluant un noeud qui émet un message de commande vers un arbre de multidiffusion, **caractérisé en ce que** le support contient les étapes suivantes :
on définit une classe d'équivalence d'acheminement, FEC ("Forwarding Equivalence Class"), pour un arbre de multidiffusion (21);
on détecte, à un routeur de commutation d'étiquettes LSR ("Label Switching Router") de sortie, un message de commande en accord avec la classe d'équivalence d'acheminement définie (22);
on obtient une route de contrainte dans la direction du préfixe de racine de l'arbre de multidiffusion, pour le message de commande détecté;
pour chaque message de commande détecté, on crée un état d'acheminement associé à la classe d'équivalence d'acheminement et à la route de contrainte (24);
on associe des paramètres d'ingénierie de trafic, TE ("Traffic Engineering"), contenant l'information d'état d'acheminement, au message de commande détecté (25);
on alloue des ressources (37) le long de la route de contrainte (26); et
on achemine le message de commande détecté et les paramètres TE (TE + JOIN) vers une destination spécifiée (27).

8. Un routeur de sortie (30) pour une communication de multidiffusion dans un réseau IP, le réseau incluant un noeud qui émet un message de commande vers un arbre de multidiffusion, **caractérisé en ce que** le routeur de sortie comprend :
un moyen pour définir une classe d'équivalence d'acheminement, FEC ("Forwarding Equivalence Class"), (37) pour un arbre de multidiffusion;
un moyen pour obtenir une route de contrainte dans la direction du préfixe racine de l'arbre de multidiffusion, pour un message de commande détecté à un routeur de commutation d'étiquettes, LSR ("Label Switching Router") de sortie, (34), ce message de commande étant en accord avec la classe d'équivalence d'acheminement définie par l'arbre de multidiffusion;
un moyen pour créer des états d'acheminement associés à la classe d'équivalence d'acheminement et à la route de contrainte, pour chaque message de commande détecté (36);
un moyen pour associer des paramètres d'ingénierie de trafic, TE ("Traffic Engineering"), contenant l'information d'état d'acheminement, au message de commande détecté (34);
un moyen pour allouer des ressources (37) le long de la route de contrainte (34); et
un moyen pour acheminer le message de commande détecté et les paramètres TE (TE + JOIN) vers une adresse spécifiée.
